# DEMANDE DE BREVET EUROPEEN

(11) **EP 1 469 381 A2**
(43) Date de publication de la demande: **20.10.2004**
(21) Numéro de dépôt: 04290599.2
(22) Date de dépôt: 04.03.2004
(51) Int. Cl.: G06F 3/06

(54) **Appareil d'écriture/lecture de fichiers informatiques stockés sur différents supports d'enregistrement**

(30) Priorité: 06.03.2003 FR 0303025
(71) Demandeur: NEC Computers International B.V., 6603 BN Wijchen (NL)
(72) Inventeur: Dessertenne, Yannick, 49000 Angers (FR)
(74) Mandataire: Maillet, Alain

(57) **Abrégé**

La présente invention concerne un appareil d'écriture/lecture de données, caractérisé en ce qu'il comporte :
- au moins des moyens de lecture pour lire des données issues d'un appareil externe ou des moyens pour lire des données stockées sur un support,
- au moins des moyens d'écriture pour écrire des données sur un support,
- des moyens de transfert pour pouvoir effectuer le transfert des données lues par des moyens de lecture vers des moyens d'écriture en vue de leur écriture sur un support.

La présente invention concerne également un ordinateur.

## Description

La présente invention concerne un appareil d'écriture/lecture de fichiers informatiques stockés sur différents supports. Ces supports sont par exemple des disques optiques numériques dits CD comme compacts disques ou DVD comme disques vidéo numériques, des disques magnétiques tels que des disques durs ou des disquettes, des mémoires à accès aléatoire dites également RAM, etc. Quant aux fichiers informatiques, ils sont des unités de stockage de données informatiques représentatives de sons, d'images fixes ou animées, de textes, etc.

Les utilisateurs d'ordinateur utilisent bien souvent leur ordinateur personnel pour faire des transferts ou des copies de fichiers informatiques d'un support à un autre, du même type ou de type différent. Par exemple, ils peuvent utiliser un appareil photographique numérique et vouloir transférer sur un disque optique numérique les fichiers informatiques représentatifs des images prises qui se trouvent stockés dans la mémoire RAM de l'appareil photographique. De même, ils peuvent vouloir faire des copies de sauvegarde de disques optiques numériques, dits CDROM, sur lesquels se trouvent les fichiers informatiques nécessaires à l'installation et au déroulement d'un programme en les copiant sur un autre CDROM. Bien sûr, ce problème est général et peut donc concerner tout type de fichiers informatiques sur tout type de support. Néanmoins, l'utilisation d'un ordinateur personnel pour ces copies ou transferts peut s'avérer longue et fastidieuse, du fait notamment du temps nécessaire à la mise en fonctionnement dudit ordinateur et des manipulations parfois fastidieuses, d'autant plus si l'utilisateur est un néophyte.

Le but de la présente invention est de proposer un appareil d'écriture/lecture de données représentatives de fichiers informatiques qui permette de résoudre les problèmes qui ont été évoqués ci-dessus.

A cet effet, un appareil d'écriture/lecture de données selon la présente invention est caractérisé en ce qu'il comporte :
- au moins des moyens de lecture pour lire des données issues d'un appareil externe ou des moyens pour lire des données stockées sur un support,
- au moins des moyens d'écriture pour écrire des données sur un support,
- des moyens de transfert pour pouvoir effectuer le transfert des données lues par des moyens de lecture vers des moyens d'écriture en vue de leur écriture sur un support.

De plus, ledit appareil d'écriture/lecture de données comporte avantageusement en outre des moyens d'interface prévus pour rendre lesdits moyens d'écriture et/ou lesdits moyens de lecture accessibles par un ordinateur personnel externe.

Il comporte également avantageusement une alimentation électrique pour son auto-alimentation électrique.

Selon un mode de réalisation de la présente invention, il comporte au moins un dispositif d'écriture/lecture qui incorpore lesdits moyens de lecture et lesdits moyens d'écriture. Par exemple, ledit dispositif d'écriture/lecture est un dispositif d'écriture/lecture de disques optiques ou un dispositif d'écriture/lecture de cartes mémoires.

Il peut s'agir d'un lecteur de disques optiques vidéo, du type dit DVD, qui comporte une sortie analogique pouvant être connecté à un téléviseur.

Dans des modes de réalisation avantageux, il comporte en outre des dispositifs d'entrée/sortie de données ou de signaux.

Selon un mode de réalisation de la présente invention, il comprend une unité de commande qui incorpore lesdits moyens de transfert et qui est pourvue d'un bus, ledit ou lesdits dispositifs d'écriture/lecture et/ou ledit ou lesdits dispositifs d'entrée/sortie étant pourvus de bus respectivement reliés audit bus de ladite unité de commande par l'intermédiaire d'un adaptateur prévu pour adapter les formats des données sur les bus desdits dispositifs au format des données sur le bus de ladite unité de commande et réciproquement.

Quant aux moyens d'interface, ils sont avantageusement reliés à un port de ladite unité de commande. Ils peuvent l'être via un concentrateur auquel est reliée au moins une interface d'entrée/sortie de même format de données que lesdits moyens d'interface.

Selon un autre mode de réalisation de la présente invention, un appareil d'écriture/lecture comprend une unité de commande qui incorpore lesdits moyens de transfert et qui est pourvue d'un bus, ledit ou lesdits dispositifs d'écriture/lecture et/ou ledit ou lesdits dispositifs d'entrée/sortie étant pourvus de bus respectivement reliés à des convertisseurs pour convertir les formats de données sur lesdits bus desdits dispositifs à un format de données commun et réciproquement, lesdits convertisseurs étant reliés à un concentrateur lui-même relié audit bus de ladite unité de commande.

Quant aux moyens d'interface, ils sont reliés audit convertisseur et ont un format de données identiques au format de données commun.

Chacun des modes de réalisation précédemment décrits peut des moyens pour pouvoir être commandé à distance.

La présente invention concerne également un ordinateur qui est caractérisé en ce qu'il est constitué d'une unité centrale et d'un appareil regroupant des dispositifs d'écriture/lecture et/ou des interfaces d'entrée/sortie conforme à celui dont on vient d'exposer les caractéristiques, ledit appareil et ladite unité centrale étant reliés ensemble via des interfaces respectives.

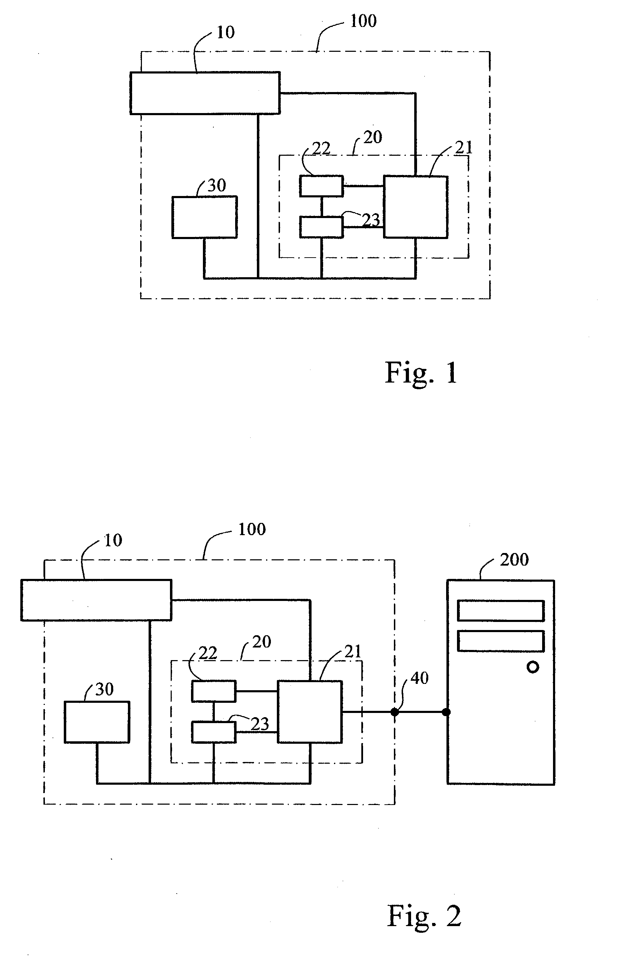

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels les Figs. 1 à 7 sont des schémas synoptiques d'appareils d'écriture/lecture respectivement selon différents modes de réalisation de la présente invention.

Un appareil d'écriture/lecture 100 selon un premier mode de réalisation exemplatif de l'invention est représenté à la Fig. 1. Il comprend un dispositif d'écriture/lecture de données informatiques sur un support particulier. Il peut par exemple s'agir d'un dispositif lecteur de disques optiques 10, par exemple de disques dits compacts disques CD (Compact Disk) ou de disques dits DVD (Digital Video Disk) prévu non seulement pour lire des données inscrites sur un disque optique inséré dans le dispositif mais également pour écrire des données sur un tel disque optique.

Il comprend encore une unité de commande 20 essentiellement constituée d'une unité de traitement 21, telle qu'un microprocesseur ou un microcontrôleur, et les circuits nécessaires à son fonctionnement, tels que des mémoires ou autres associés 22 et 23.

L'unité de commande 20 est reliée au dispositif d'écriture/lecture 10 de manière à pouvoir le commander, à lire les données lues par le dispositif 10 et à y transférer des données en vue de leur écriture sur un support inséré dans ledit dispositif 10.

Le dispositif d'écriture/lecture 10, l'unité de traitement 21 ainsi que les circuits nécessaires à son fonctionnement 22 et 23 sont alimentés par une alimentation 30 qui est partie intégrante de l'appareil d'écriture/lecture selon l'invention. Celui-ci est donc complètement autonome.

Le dispositif d'écriture/lecture 10 est donc pourvu de moyens pour lire des données stockées sur un support qu'il contient et des moyens pour stocker des données sur un support vierge inséré dans ledit dispositif. Quant à l'unité de commande 20, elle fonctionne de manière à procurer des moyens pour pouvoir effectuer le transfert des données qui sont lues par le dispositif 10 à partir d'un premier support de manière à pouvoir écrire ces données sur un support contenu dans le même dispositif 10.

Dans le cas d'un dispositif d'écriture/lecture de disques optiques, l'utilisateur insère le premier disque sur lequel sont stockées des données, représentatives de fichiers informatiques (fichiers de programme, fichiers d'image, fichiers de sons, etc.). Le dispositif 10 lit lesdites données qui sont alors stockées dans une mémoire 22 associée à l'unité 21. Après un laps de temps correspondant à la lecture de l'ensemble des données à transférer, l'utilisateur retire le premier disque et insère maintenant un disque vierge. Les données qui ont été mises en mémoire sont alors transférées sur ce disque vierge où elles sont stockées.

On notera que, dans ce mode de réalisation, le dispositif d'écriture/lecture 10 pourrait être aussi bien un dispositif d'écriture/lecture de tout autre support, par exemple un dispositif d'écriture/lecture de cartes mémoires, du type actuellement commercialisées sous les marques CompactFlash® , Smartmedia® , etc. pour pouvoir effectuer un transfert de carte à carte.

A la Fig. 2, on a représenté un second mode de réalisation d'un appareil d'écriture/lecture selon la présente invention. Il diffère du précédent mode de réalisation en ce que ladite unité de commande 20 pilote également une interface 40 permettant à l'appareil de pouvoir être raccordé à un ordinateur 200. Par exemple, cette interface est une interface de préférence à haut débit, par exemple une interface série, telle que l'interface connue sous le nom d'interface USB (Universal Serial Bus : bus série universel) ou une interface du type IEEE1394 dite également Firewire®. Il est alors possible de transférer des données du support inséré dans le dispositif d'écriture/lecture 10 vers l'ordinateur 200 et de l'ordinateur 200 vers le support inséré dans le dispositif d'écriture/lecture 10.

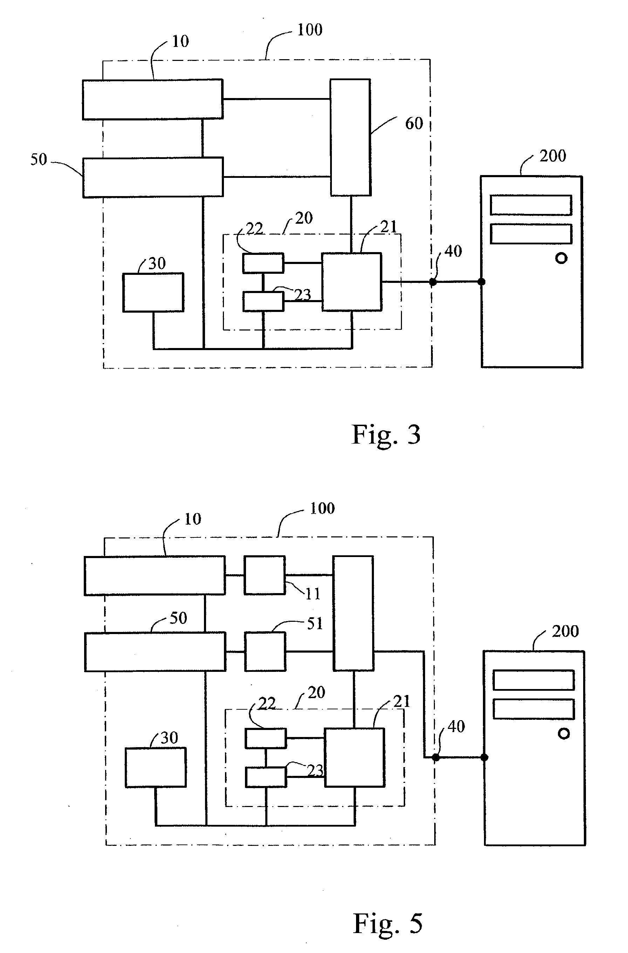

A la Fig. 3, on a représenté un autre mode de réalisation d'un appareil d'écriture/lecture selon la présente invention qui, outre un dispositif d'écriture/lecture 10 tel que par exemple un dispositif d'écriture/lecture de disques dits compacts disques CD (Compact Disk) ou de disques dits DVD (Digital Video Disk), une unité de commande 20 constituée d'une unité de traitement 21 et des circuits 22 et 23 nécessaires à son fonctionnement, comprend encore un dispositif de lecture 50 de supports informatiques, tels des disques optiques, disques magnétiques (disquette par exemple), ou des cartes mémoires. Comme on le verra également par la suite, le dispositif lecteur 50 peut également être un dispositif d'écriture sur de tels supports.

On notera que le dispositif de lecture 50 est également alimenté par l'alimentation 30.

Le dispositif de lecture/écriture 10 et le dispositif de lecture 50 sont reliés à un adaptateur 60 par ailleurs relié à l'unité de commande 20. L'adaptateur 60 a pour fonction d'adapter le format des données sur le bus du dispositif d'écriture/lecture 10 et sur le bus du dispositif de lecture 50 et à celui des données sur le bus de l'unité de commande 20. On entend par format des données, le format tant au niveau physique qu'au niveau applicatif. Par exemple, les bus du dispositif d'écriture/lecture 10 et du dispositif de lecture 50 sont des bus IDE (Integrated Drive Electronics) alors que le bus de l'unité de commande 20 est le bus de données de l'unité de traitement 21. Par exemple encore, dans le cas où le dispositif de lecture 50 est un lecteur de carte mémoire, le bus peut être celui d'un lecteur de carte.

Dans ce mode de réalisation, le dispositif de lecture 50 permet de lire des données représentatives de fichiers informatiques sur un support (par exemple un disque CD ou une carte mémoire). Ces données peuvent être transférées, via l'unité de commande 20, vers le dispositif d'écriture/lecture 10 où elles seront écrites sur un disque CD vierge. Rien n'empêche le transfert de données inscrites sur un support contenu dans le dispositif d'écriture/lecture 10 vers un autre support inséré dans le même dispositif d'écriture/lecture 10.

On notera, par ailleurs, que si le dispositif 50 est un dispositif d'écriture/lecture, rien n'empêchera non plus le transfert de données d'un support contenu dans le dispositif d'écriture/lecture 50 vers un autre support inséré dans le même dispositif d'écriture/lecture 50.

On notera encore que l'interface 40 avec un ordinateur 200 permet à celui-ci d'accéder aux dispositifs d'écriture/lecture 10 et 50. Néanmoins, dans des modes de réalisation spécifiques, cette interface 40 pourrait ne pas être présente, à l'instar de l'appareil représenté à la Fig. 1.

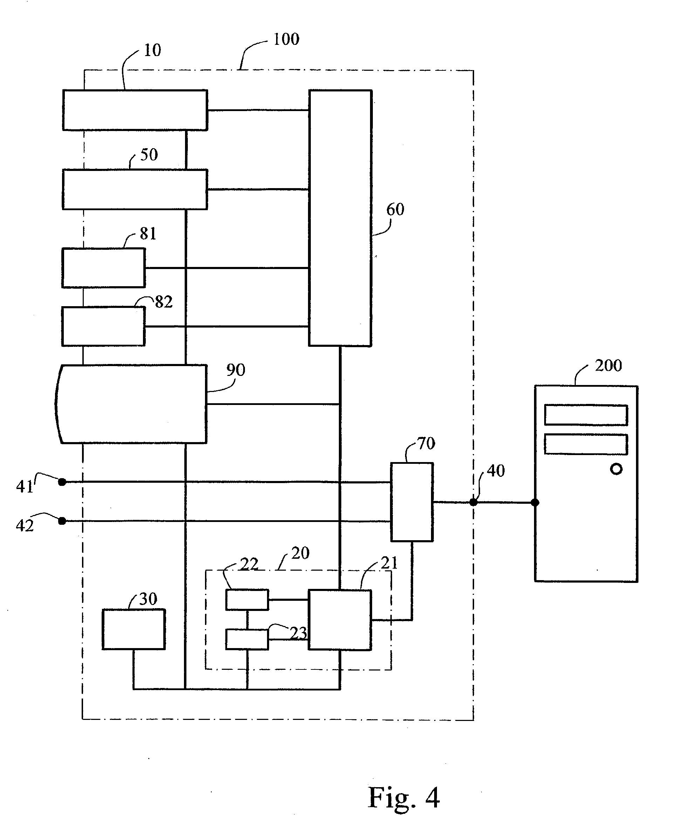

On a représenté à la Fig. 4 une variante de réalisation du mode de réalisation représentée à la Fig. 3. Il comporte donc des éléments identiques suivants : les dispositifs d'écriture/lecture 10 et 50, une unité de commande 20 constituée d'une unité de traitement 21 et des circuits 22 et 23 nécessaires à son fonctionnement, une alimentation 30 et un adaptateur 60.

Il comporte encore une interface 40 avec un ordinateur 200 mais qui, contrairement au mode de réalisation de la Fig. 3, n'est pas directement reliée à l'unité de commande 20 mais via un concentrateur 70 qui est également relié à deux autres interfaces 41 et 42 du même type. Le nombre de deux pour les interfaces 41 et 42 est donné à titre exemplatif. Par exemple, les interfaces 40, 41 et 42 sont des interfaces série à haut débit, par exemple du type USB, USB2.

Il comporte encore une interface audio d'entrée 81 et une interface audio de sortie 82 reliées à l'adaptateur 60 dont une des fonctions est d'effectuer les conversions nécessaires d'analogique au format du bus 61 des signaux audio et réciproquement.

Il comporte encore un écran 90 qui est directement relié au bus 61 de l'unité de commande 20. Cet écran 90 peut servir à afficher des instructions destinées à l'utilisateur.

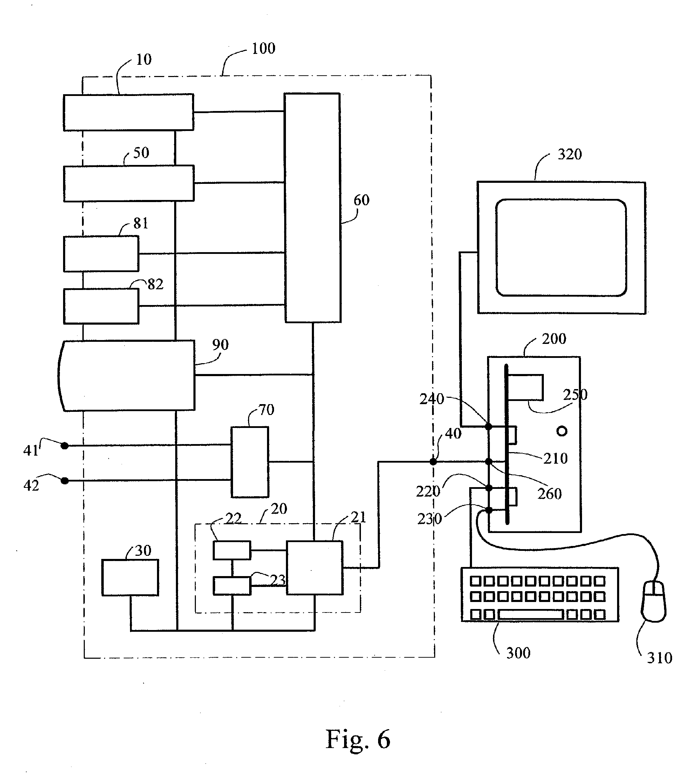

Un autre mode de réalisation équivalent de celui qui est représenté à la Fig. 3 est représenté à la Fig. 5. Dans ce mode de réalisation, chaque dispositif d'écriture/lecture 10, 50 comporte un convertisseur de bus 11, 51 par exemple vers un bus série du type USB. Il comporte encore un concentrateur 70 prévu pour router les données lues soit vers l'unité de commande 20, soit vers l'interface 40. Les données à écrire sur l'interface 40 sont transférées à un dispositif d'écriture/lecture 10, 50 via son convertisseur de bus associé 11, 51. Il en est de même des données à écrire présentes sur le bus de l'unité de commande 20.

Dans ce mode de réalisation, l'appareil d'écriture/lecture pourrait comporter en outre, à l'instar de l'exemple de réalisation de la Fig. 4, une ou plusieurs interfaces série, par exemple du type USB, une interface audio d'entrée et une interface audio de sortie et un écran 90, respectivement reliés au concentrateur 70 par l'intermédiaire d'un convertisseur approprié.

On a représenté à la Fig. 6 une variante de réalisation du mode précédent représentée à la Fig. 4 dans laquelle le concentrateur 70 est relié au bus 61 de l'unité de commande 20 alors que l'interface 40 est reliée directement à l'unité de commande 20. Ainsi, alors que les interfaces 41 et 42 sont par exemple du type USB ou USB2, l'interface 40 pourrait être à très haut débit, par exemple du type IEEE1394 ou autre.

Dans une telle architecture (mais également dans celle qui fait l'objet de l'exemple de réalisation de la Fig. 5), il peut être envisagé que l'ordinateur 200 ne possède plus ni dispositifs d'écriture/lecture tels que disque dur, disquette, lecteur de CD, à l'exception cependant, dans certains modes de réalisation, de ceux nécessaires au déroulement des programmes utilisateur etc. ni d'interfaces d'entrée/sortie telles que ports USB, interface audio, etc. qui se trouveraient alors en quelque sorte déportés dans un appareil 100 selon l'invention. Cet ordinateur 200 devient alors une unité centrale 200' qui, tel que cela est représenté à la Fig. 6, comporte une carte-mère simplifiée 210 qui regroupe la ou les unités de traitement d'un ordinateur classique, une interface 220 pour un clavier 300, une interface 230 pour une souris 310, une interface 240 pour un écran 320 et éventuellement un dispositif d'écriture/lecture 250 nécessaire au déroulement des programmes utilisateur. Il comporte également une interface 260 pour la connexion de l'appareil 100 à son interface 40.

La présente invention concerne donc un ordinateur d'une telle architecture qui comprend, d'une part, une unité centrale simplifiée qui est sans dispositif d'écriture/lecture à l'exception de ceux nécessaires au déroulement des programmes utilisateur et qui est sans interface d'entrée/sortie et, d'autre part, un appareil regroupant des dispositifs d'écriture/lecture et des interfaces d'entrée/sortie.

On notera que dans ce mode de réalisation spécifique, un des dispositifs d'écriture/lecture 10, 50 pourrait être un dispositif d'écriture/lecture magnétique tel qu'un disque dur.

L'utilisateur peut placer l'ordinateur simplifié sur le sol et l'appareil annexe sur son bureau. Ainsi, un tel ordinateur permet à l'utilisateur d'avoir accès facilement aux dispositifs d'écriture/lecture tels que disque dur, disquette, lecteur de CD, etc. et aux interfaces d'entrée/sortie telles que ports USB, interface audio, etc. contrairement aux ordinateurs connus jusqu'à ce jour où un tel accès oblige généralement l'utilisateur à des contorsions d'autant plus pénibles si cet accès doit se faire à l'arrière de la machine.

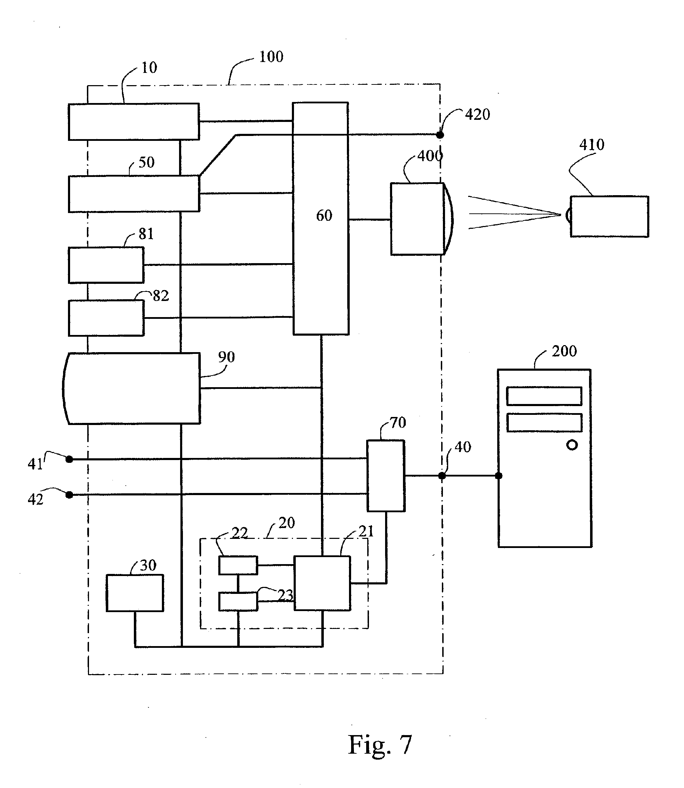

A la Fig. 7, on a représenté un autre mode de réalisation qui diffère du mode de réalisation représenté à la Fig. 4, en ce qu'il comporte un récepteur 400 de signaux de commande émis par une unité de télécommande 410, ou télécommande 410. Cette télécommande 410 permet à l'utilisateur de commander à distance certaines fonctionnalités de l'appareil d'écriture/lecture 100, comme les commandes "play", "pause", "stop", avance rapide avant et arrière, etc. des dispositif d'écriture/lecture 10, 50.

On peut également remarquer qu'il comporte un connecteur 420 relié à une sortie analogique du dispositif d'écriture/lecture 50. Si ce dernier est un lecteur de disques optiques vidéo du type dits DVD, le connecteur 420 peut être relié à un téléviseur, par exemple à sa prise dite Péritel, pour afficher les disques optiques qui sont lus par ledit lecteur 50.

On comprendra que les caractéristiques additionnelles de la Fig. 7 qui viennent d'être exposées pourraient être implémentées dans les mode de réalisation représentés aux Figs. 1 à 6.

## Revendications

1. Appareil d'écriture/lecture de données, du type qui comporte, d'une part, au moins un dispositif d'écriture/lecture (10, 50) incorporant des moyens de lecture pour lire des données issues d'un appareil externe ou des moyens pour lire des données stockées sur un support, des moyens d'écriture pour écrire des données sur un support, et une unité de commande (20), **caractérisé en ce que** ladite unité de commande (20) incorpore des moyens de transfert pour pouvoir effectuer le transfert des données lues par lesdits moyens de lecture vers lesdits moyens d'écriture en vue de leur écriture sur un support.

2. Appareil d'écriture/lecture de données selon la revendication 1, **caractérisé en ce qu'**il comporte en outre des moyens d'interface (40) prévus pour rendre lesdits moyens d'écriture et/ou lesdits moyens de lecture accessibles par un ordinateur personnel externe.

3. Appareil d'écriture/lecture de données selon la revendication 1 ou 2, **caractérisé en ce qu'**il comporte une alimentation électrique (30) pour son auto-alimentation électrique.

4. Appareil d'écriture/lecture de données selon une des revendications précédentes, **caractérisé en ce qu'**il comporte au moins un dispositif d'écriture/lecture (10, 50) qui incorpore lesdits moyens de lecture et lesdits moyens d'écriture.

5. Appareil d'écriture/lecture de données selon la revendication 4, **caractérisé en ce que** ledit ou un dispositif d'écriture/lecture (10, 50) est un dispositif d'écriture/lecture de disques optiques.

6. Appareil d'écriture/lecture de données selon la revendication 5, **caractérisé en ce que** ledit ou un dispositif d'écriture/lecture (10, 50) est un lecteur de disques optiques vidéo, du type dit DVD, qui comporte une sortie analogique pouvant être connecté à un téléviseur.

7. Appareil d'écriture/lecture de données selon la revendication 4, **caractérisé en ce que** ledit ou un dispositif d'écriture/lecture (10, 50) est un dispositif d'écriture/lecture de cartes mémoires.

8. Appareil d'écriture/lecture de données selon une des revendications précédentes, **caractérisé en ce qu'**il comporte en outre des dispositifs d'entrée/sortie de données (41, 42) et/ou de signaux (81, 82).

9. Appareil d'écriture/lecture de données selon une des revendications précédentes, **caractérisé en ce qu'**il comprend une unité de commande (20) qui incorpore lesdits moyens de transfert et qui est pourvue d'un bus (61), ledit ou lesdits dispositifs d'écriture/lecture (10, 50) et/ou ledit ou lesdits dispositifs d'entrée/sortie (41, 42, 81, 82) étant pourvus de bus respectivement reliés audit bus (61) de ladite unité de commande (20) par l'intermédiaire d'un adaptateur (60) prévu pour adapter les formats des données sur les bus desdits dispositifs ( 10, 50, 41, 42, 81, 82) au format des données sur le bus (61) de ladite unité de commande (20) et réciproquement.

10. Appareil d'écriture/lecture de données selon la revendication 9, **caractérisé en ce que** lesdits moyens d'interface (40) sont reliés à un port (24) de ladite unité de commande (20).

11. Appareil d'écriture/lecture de données selon la revendication 9, **caractérisé en ce que** lesdits moyens d'interface (40) sont reliés à un port (24) de ladite unité de commande (20) via un concentrateur (70) auquel est reliée au moins une interface d'entrée/sortie (41, 42) de même format de données que lesdits moyens d'interface (40).

12. Appareil d'écriture/lecture de données selon une des revendications 1 à 8, **caractérisé en ce qu'**il comprend une unité de commande (20) qui incorpore lesdits moyens de transfert et qui est pourvue d'un bus (61), ledit ou lesdits dispositifs d'écriture/lecture (10, 50) et/ou ledit ou lesdits dispositifs d'entrée/sortie (41, 42, 81, 82) étant pourvus de bus respectivement reliés à des convertisseurs (11, 51) pour convertir les formats de données sur lesdits bus desdits dispositifs à un format de données commun et réciproquement, lesdits convertisseurs (11, 51) étant reliés à un concentrateur (70) lui-même relié audit bus (61) de ladite unité de commande (20).

13. Appareil d'écriture/lecture de données selon la revendication 12, **caractérisé en ce que** lesdits moyens d'interface (40) sont reliés audit concentrateur (70) et ont un format de données identique au format de données commun.

14. Appareil d'écriture/lecture de données selon une des revendications précédentes, **caractérisé en ce qu'**il comporte des moyens (400, 410) pour pouvoir être commandé à distance.

15. Ordinateur, **caractérisé en ce qu'**il est constitué d'une unité centrale (200') et d'un appareil (100') regroupant des dispositifs d'écriture/lecture (10, 50) et/ou des interfaces d'entrée/sortie (41, 42, 81, 82) conforme à une des revendications 2 à 14, ledit appareil (100') et ladite unité centrale (200') étant reliés ensemble via des interfaces respectives (40, 260).
